# EUROPÄISCHE PATENTANMELDUNG

(11) **EP 1 526 417 A2**
(43) Veröffentlichungstag der Anmeldung: **27.04.2005**
(21) Anmeldenummer: 04020527.0
(22) Anmeldetag: 30.08.2004
(51) Int. Cl.: G05B 19/042

(54) **Verfahren zur Istwertspeicherung**

(30) Priorität: 01.10.2003 DE 10346144
(71) Anmelder: Bosch Rexroth AG, 70184 Stuttgart (DE)
(72) Erfinder: Sailer, Alexander, 73571 Göggingen (DE); Merz, Martin, 74427 Fichtenberg (DE); Schindler, Albrecht, 71546 Aspach (DE); Klepsch, Thorsten, 71546 Aspach (DE)
(74) Vertreter: Thürer, Andreas

(57) **Zusammenfassung**

Verfahren zur Steuerung eines industriellen Prozesses mittels einer programmierbaren Prozesssteuerung, wobei Daten in Form von Ergebniswerten, die für den Prozess maßgeblich sind aufgenommen werden und im dafür vorgesehenen Speicher der programmierbaren Prozesssteuerung abgespeichert werden:
beim Starten eines Steuerungsprogramms werden vordefinierte, in einem Speicher der Steuerung abgelegte Konfigurationsdaten, die mit dem Steuerungsprogramm verknüpft sind, ausgelesen, und anhand dieser Konfigurationsdaten wird eine an den in der Steuerung verfügbaren Ergebniswertspeicher angepasste Untermenge der Ergebniswerte selektiert und anschließend in diesem Speicher abgespeichert.

## Beschreibung

### Technisches Gebiet

Die Erfindung betrifft ein Verfahren und eine Vorrichtung zur Steuerung- und/oder Regelung eines industriellen Prozesses mittels einer programmierbaren Prozesssteuerung.

### Stand der Technik

Industrielle Steuerungen arbeiten mit immer kürzeren Taktzeiten und die Datenmengen, die verwaltet werden müssen, steigen demzufolge. Um die Qualität eines Prozesses zu überprüfen, werden Daten online in Echtzeit aufgenommen, in schnellem Speicher abgespeichert, und anschließend ausgewertet. Wenn der Prozess sich in schnellem Takt wiederholt, kommt es oft vor, dass der schnelle Datenspeicher (R.A.M.) der Steuerung nicht ausreicht, um alle Ergebniswerte des Prozesses abzusichern. In diesem Fall können Daten unerwünscht verloren gehen. Die Qualität der statistischen Auswertung der Daten leidet darunter und anschließend auch die Qualität des Prozesses.

### Darstellung der Erfindung

Es ist daher Aufgabe der vorliegenden Erfindung, eine bessere Kapazitätsausnutzung und insbesondere eine bessere Effizienz der beteiligten Steuerungs- und/oder Regelungssysteme herbeizuführen.

Diese Aufgaben werden erfindungsgemäß durch das Verfahren gemäß Anspruch 1 und die Vorrichtung gemäß Anspruch 9 gelöst. Weitere vorteilhafte Ausgestaltungen der Erfindung finden sich in den Unteransprüchen.

Das Verfahren zur Steuerung und/oder Regelung eines industriellen Prozesses mittels einer programmierbaren Prozesssteuerung umfasst eine Methode, um Daten in der Form von Ergebniswerten, die für den Prozess maßgeblich sind, aufzunehmen und im dafür vorgesehenen Speicher der programmierbaren Prozesssteuerung abzuspeichern. Beim Starten eines Programms werden vordefinierte Konfigurationsdaten, die mit dem Programm verknüpft sind, aus einer in einem Speicher der Steuerung abgelegte Datentabelle ausgelesen, und anhand dieser Konfigurationsdaten wird eine an den in der Steuerung verfügbaren Ergebniswertspeicher angepasste Untermenge der Ergebniswerte selektiert und anschließend in diesem Speicher abgespeichert. Das Verfahren ermöglicht die optimierte Ausnutzung des vorhandenen Datenspeichers der Steuerung, verhindert, dass Daten unerwünscht verloren gehen und erhöht dadurch die Effizienz des Verschraubungsprozesses. Vorteilhafterweise werden die Konfigurationsdaten in einem langsameren, aber dafür billigeren Flashspeicher abgelegt und vor Begin des Prozesses "offline" ausgelesen und das System dementsprechend eingestellt. Die Konfigurationsdaten werden vorteilhafterweise einer CRC-Prüfung unterzogen, um Fehler in der Konfigurationsphase zu vermeiden und die aufgenommenen Ergebniswerte im SRAM abgespeichert. Vorteilhafterweise wird die SRAM-Batterie gepuffert, um Datenverluste, z.B. wegen Netzausfall zu vermeiden. Das Gerät kann längere Zeit vom Netz gezogen werden, ohne, dass die Daten des letzten Ablaufs verloren gehen.

Um die vorhandenen Speicher an den Prozess anzupassen, ist es vorgesehen, den Speicher als Ringspeicher oder Stack definieren zu können. Der Vorteil ist, dass je nach Zykluszeit und Wiederholungsrate der Speicher so konfiguriert werden kann, dass die gewünschten Prozessdaten automatisch akquiriert werden.

Vorteilhafterweise ist es auch vorgesehen, programmspezifische Daten in Form von Text-Strings abzuspeichern, d.h., dass in den Konfigurationsdaten sowohl numerische Elemente als auch Textelemente vordefiniert werden können. Um die Steuerung an die Anforderungen aller Systembenutzer anzupassen, ist es auch vorgesehen, dass der/die Benutzer die Konfigurationsdaten durch eine dafür vorgesehene Software-Applikation an seine/ihre Anforderungen anpassen kann. Diese Funktionalität erhöht die Flexibilität des Systems und minimiert den Bedarf an teurem, batteriegepuffertem Datenspeicher.

Vorteilhafterweise ist erfindungsgemäß eine Steuerung, vorzugsweise eine Schraubsteuerung mit Kommunikationsbussystem und ein an dem Bussystem angeschlossenes HMI (Human Machine Interface) vorgesehen. Die Konfigurationsdaten und die Steuerung können durch das HMI an die Anforderungen der Benutzer und an den Prozess selbst angepasst werden. Damit ist auch vorgesehen, dass Firmware-Updates durch das HMI auf die Steuerung übertragen werden können.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1: ein schematische Darstellung des Speichers einer Steuerung;
- Figur 2: ein Software-Flowchart einer Implementierung der Erfindung;
- Figur 3: eine erfindungsgemäße Prozesssteuerung.

In den Figuren sind nur die für das Verständnis der Erfindung wesentlichen Elemente und Bauteile in schematisierter Darstellung wiedergegeben.

Gleiche oder gleichwirkende Bauteile sind in den Figuren weitgehend mit gleichen Bezugszeichen gekennzeichnet.

### Wege zur Ausführung der Erfindung

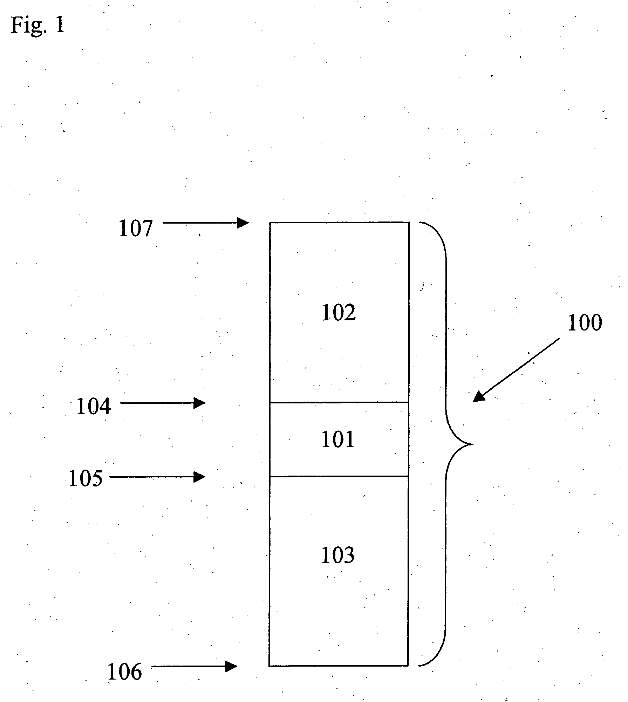

In Figur 1 ist eine schematische Darstellung des Bereiches 101,102,103 eines SRAM-Speichers einer Schraubsteuerung dargestellt. Der Speicherbaustein ist insgesamt 128 KB groß und der für die Ergebniswerte vorgesehene Bereich 101 ist 100836 Bytes groß. Die Größe der Bereiche kann durch Software-Inbetriebnahme-Tools "offline" eingestellt werden, wobei eine "online"-Einstellung auch prinzipiell möglich ist. Die Bereiche, die unterhalb 103 und oberhalb 102 des Ergebnisspeicherbereichs 101 liegen, sind für andere Systemfunktionen reserviert. Der Bereich 101 kann als Stack oder Ringspeicher konfiguriert werden, d.h., der Speicher 101 kann entweder mit Ergebniswerten geschrieben werden, bis der Bereich 101 voll ist und dann alle weiteren Ergebniswerte nicht abgespeichert werden, oder alte Daten können fortlaufend überschrieben werden. Die Einstellung, ob Ring oder Stack, hängt vom Prozess ab.

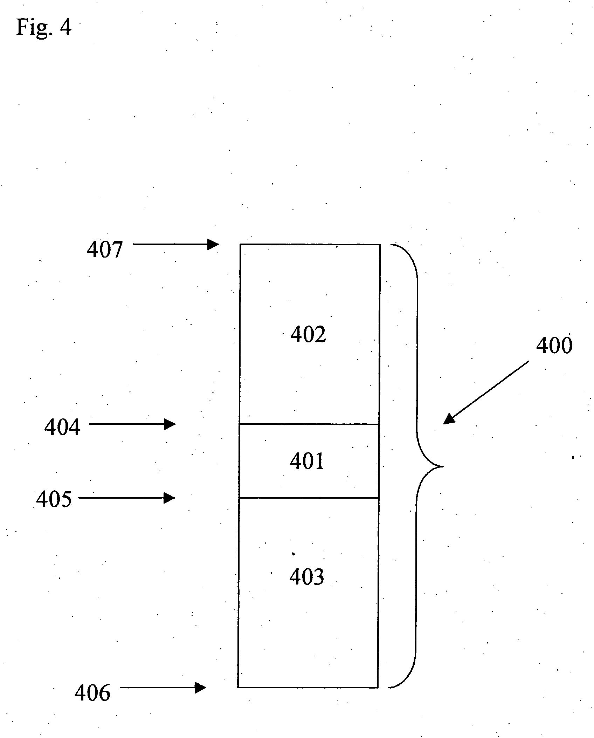

In Fig. 4 ist eine schematische Darstellung des Bereiches 401, 402, 403 eines FLASH-Speichers einer Schraubsteuerung dargestellt. Der Speicherbaustein ist insgesamt 1 MB groß und der für Konfigurationsdaten vorgesehene Bereich 401 hat eine Größe von 746 Bytes.

Der Inhalt des Bereichs 401 kann durch Software-Inbetriebnahme-Tools "offline" geändert werden, wobei eine "online"-Einstellung auch prinzipiell möglich ist. Die Bereiche, die unterhalb 403 und oberhalb 402 des Ergebnisspeicherbereichs 401 liegen, sind für andere Systemfunktionen reserviert.

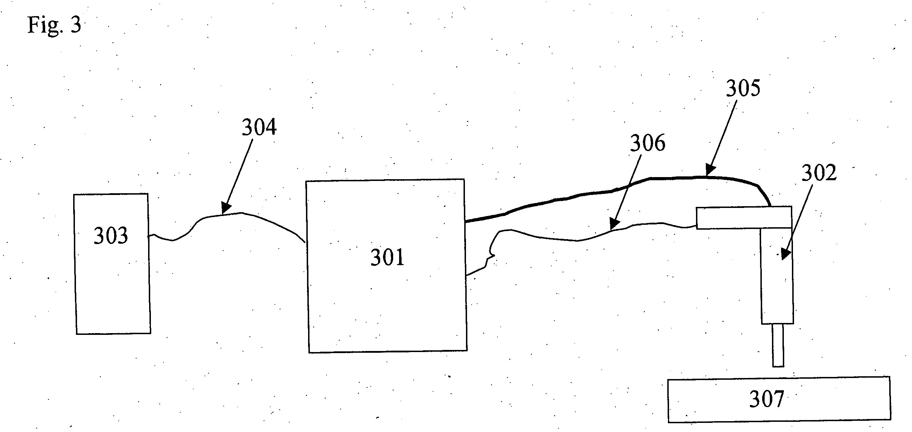

In Fig. 3 ist ein Schraubprozess schematisch dargestellt, inklusive Prozesssteuerung 301, HMI 303, Schraubgerät 302 und Werkstück 307. Das Schraubgerät ist an der Prozesssteuerung über eine Kommunikationsschnittstelle 305 verbunden und ein Leistungsanschluss 305. Der Leistungsanschluss 305 kann elektrisch oder pneumatisch sein, je nach Art des Schraubgeräts 302. Die Kommunikationsschnittstelle 306 ist vorzugsweise bidirektional ausgeführt. Das Schraubgerät 302 ist mit einigen Sensoren versehen, z.B. Drehmomentsensoren, Encoder, Drehgeber und/oder Drucksensoren, die während des Schraubprozesses Daten aufnehmen und die Daten an die Steuerung 301 übertragen. Die Daten werden anhand der im Konfigurationsspeicher 401 vorhandenen Konfiguration gefiltert und die gewünschte Variable im SRAM 101 abgespeichert. Die abgespeicherten Daten können entweder von der Schraubsteuerung 301 selbst ausgewertet werden, oder können an eine weitere Steuerung weitergeleitet werden. Die weitere Steuerung kann entweder an den Datenbus 304 angeschlossen oder an einen weiteren Bus oder an ein weiteres Netzwerk, wie ein Ethernet LAN angeschlossen werden.

Die Prozesssteuerung 301 ist mit einem HMI 303 über den Datenbus 304 verbunden. Das HMI kann ein einfaches Gerät sein oder ein sehr leistungsfähiges PC basiertes Gerät. Das HMI 303 wird hauptsächlich benutzt, je nach Rechenleistung und Speicherkapazität, um die. Prozesssteuerung 301 in Betrieb zu nehmen und um Prozessparameter zu analysieren, zu adjustieren und/oder zu optimieren. Ein Inbetriebnahme-Software-Werkzeug ist auf dem HMI 303 installiert, das dem Systembenutzer erlaubt, die Konfigurationsdaten an die Anforderungen des Prozesses anzupassen. Wenn das HMI 303 ein PC basiertes Gerät ist, hat das Software-Werkzeug eine grafische Oberfläche, die dem Benutzer einen einfachen Zugriff auf die Prozessdaten erlaubt. Es können mittels einigen GUI's die gewünschte Speicherkonfiguration grafisch eingestellt werden, die Einstellung anschließend vom Software-Werkzeug interpretiert und die relevanten Befehle an die Steuerung 301 übertragen werden.

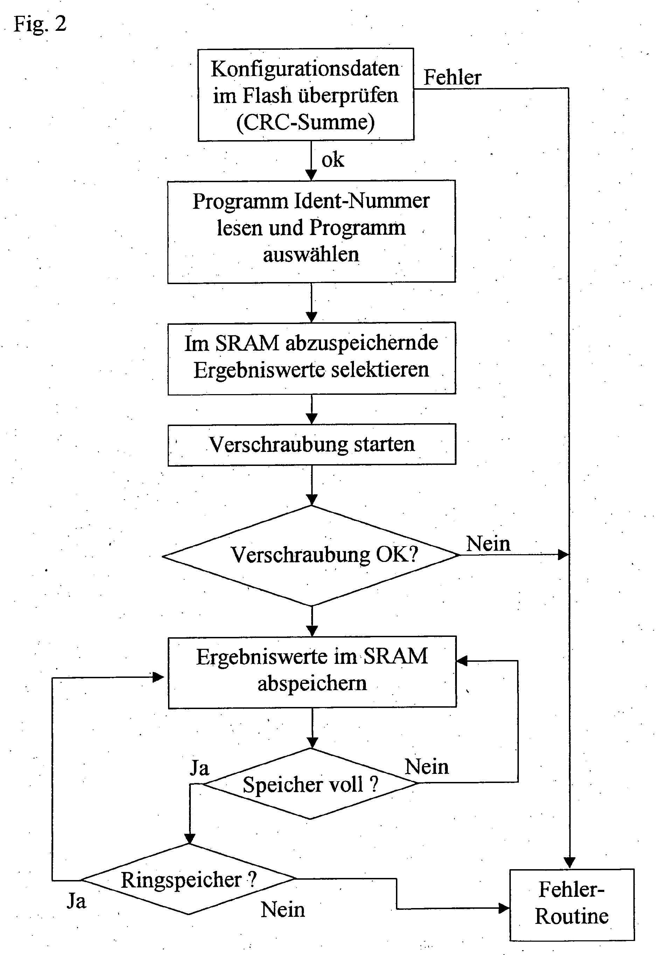

In Fig. 2 ist ein Ablaufdiagramm des Ergebnisdaten-Speicherprozesses dargestellt, wobei zuerst die Konfigurationsdaten im Flash über eine CRC-Summe auf Integrität im Speicher überprüft werden. Die Konfigurationsdaten enthalten Informationen, beim Start welche Programme welche Ergebniswerte im SRAM 100 auf welche Art gespeichert werden.

Beim Start stehen 48 Programme zur Auswahl (0-47) + ein Programm zum Lösen der Verschraubung. Jedes Bit steht für ein angewähltes Programm, Bit0/Prg0, Bit1/Prg1, usw. Sonderfall, Bit63/Prg99 (Lösen)

Der Benutzer kann aus allen vorhandenen Ergebniswerten der verschiedenen Dokumentationsstufen und der Ergebnisstufe auswählen, welche Ergebniswerte er im SRAM 100 ablegen möchte. Es können max. 20 allgemeine Informationen abgelegt werden. Dies sind Daten, die programmspezifisch sind, wie z.B. ID-Code, Programmnummer, usw. Für jede Information gibt es eine eindeutige Ressource ID. Ist diese in der Konfiguration vorhanden, wird die entsprechende Variable im Ergebnisspeicher 101 abgelegt. Bei Zeichenketten, wie z.B. dem Programmnamen, kann der Anwender anhand des Start- und Stopwertes auch nur einen Teil der Zeichenkette ablegen. Daraus ergibt sich auch der benötigte Platz für die Ressource ID. Für Schraubdaten, wie z.B. Moment, Winkel, und Gradient ist je Stufe für max. 80 verschiedene Ressourcen-ID's Platz vorhanden. Die Stufenanzahl ist auf 4 begrenzt. Dies entspricht der Ergebnisstufe und bis zu 3 Dokumentationsstufen, die der Anwender im Schraubprogramm frei wählen kann. Der "Wert" entspricht dem Speicherbedarf in Bytes für die angewählte Ressource ID.

Der Speicher 101 kann wie ein Stack benutzt werden, auf den immer oben auf Daten gelegt werden. Hierbei werden, wenn der SRAM 101 verbraucht ist, keine weiteren Schraubdaten gesichert.

Die 2. Art ist, den Speicher 101 wie ein Ringspeicher zu benutzen. Hierbei werden die Daten immer in den SRAM 101 geschrieben. Sollte dieser bereits voll sein, so werden die ältesten Daten im SRAM 101 überschrieben.

Die Ergebnisdaten werden in Abhängigkeit der Konfigurationsdaten im SRAM 101 abgelegt.

Dies hat den Vorteil, dass nur die Daten im SRAM 101 abgelegt werden, die für den Benutzer von Interesse sind.

Abläufe bei einer Verschraubung:
- Anstarten einer Verschraubung;
- Nach der Bewertung der Verschraubung durch die Hardware (Signale der Betriebsmittelsteuerung, wie z.B. OK, NOK, Winkel zu hoch,...) werden die Ergebnisdaten in den SRAM 101 eingetragen. Der Umfang der in den SRAM 101 geschriebenen Daten hängt von den Konfigurationsdaten ab, die im Flash 401 abgelegt sind.

### Bezugszeichenliste

- 100: 128k SRAM
- 101: Ergebniswertspeicher
- 102: Freier Speicher
- 103: Freier Speicher
- 104: Ergebniswertspeicher obere Adresse
- 105: Ergebniswertspeicher Basisadresse
- 106: Speicher Basisadresse
- 107: Speicher obere Adresse
- 301: Schraubsteuerung
- 302: Schraubgerät
- 303: HMI
- 304: Kommunikationsbussystem
- 305: Leistungsanschluss
- 306: Datenschnittstelle
- 307: Werkstück
- 400: 128k SRAM
- 401: Ergebniswertspeicher
- 402: Freier Speicher
- 403: Freier Speicher
- 404: Ergebniswertspeicher obere Adresse
- 405: Ergebniswertspeicher Basisadresse
- 406: Speicher Basisadresse
- 407: Speicher obere Adresse

## Patentansprüche

1. Verfahren zur Steuerung eines industriellen Prozesses mittels einer programmierbaren Prozesssteuerung (301), wobei Daten in der Form von Ergebniswerten, die für den Prozess maßgeblich sind, aufgenommen werden und im dafür vorgesehenen Speicher (101) der programmierbaren Prozesssteuerung abgespeichert werden, **dadurch gekennzeichnet, dass** beim Starten eines Steuerungsprogramms vordefinierte, in einem Speicher der Steuerung abgelegte Konfigurationsdaten, die mit dem Steuerungsprogramm verknüpft sind, ausgelesen werden, und anhand dieser Konfigurationsdaten eine an den in der Steuerung verfügbaren Ergebniswertspeicher (101) angepasste Untermenge der Ergebniswerte selektiert wird und anschließend in diesem Speicher (100) abgespeichert wird.

2. Verfahren nach Anspruch 1, **dadurch gekennzeichnet, dass** die Konfigurationsdaten im Flash-Speicher abgelegt sind.

3. Verfahren nach Anspruch 2, **dadurch gekennzeichnet, dass** die Konfigurationsdaten über eine CRC-Summe auf Integrität überprüft werden.

4. Verfahren nach Anspruch 1, **dadurch gekennzeichnet, dass** die Ergebniswerte in einen SRAM (100) abgespeichert werden.

5. Verfahren nach Anspruch 4, **dadurch gekennzeichnet, dass** der SRAM als Ringspeicher oder als Stack konfiguriert werden kann.

6. Verfahren nach Anspruch 1, **dadurch gekennzeichnet, dass** vordefinierte programmspezifische Daten mit abgespeichert werden.

7. Verfahren nach Anspruch 1, **dadurch gekennzeichnet, dass** die Konfigurationsdaten modifiziert werden können.

8. Verfahren nach Anspruch 1, **dadurch gekennzeichnet, dass** die Prozesssteuerung (301) einen Verschraubungsprozess steuert und dass die Ergebniswerte Verschraubungsdaten entsprechen.

9. Vorrichtung zur Implementierung des Verfahrens nach einem der Ansprüche 1 bis 8, wobei eine Prozesssteuerung (301) mit mindestens einem Bediengerät (303) über eine Kommunikationsschnittstelle (304) oder ein Bussystem (304) verbunden ist, **dadurch gekennzeichnet, dass** die im Speicher der Prozesssteuerung enthaltenen Konfigurationsdaten über das Bediengerät (303) mittels einem dafür vorgesehenen Bedienprogramm geändert werden können.

10. Vorrichtung nach Anspruch 8, **dadurch gekennzeichnet, dass** die Steuerung eine Schraubsteuerung ist.
